# EUROPEAN PATENT APPLICATION

(11) **EP 4 616 702 A1**
(43) Date of publication of application: **17.09.2025**
(21) Application number: 24743247.9
(22) Date of filing: 24.01.2024
(51) Int. Cl.: A01G 7/06

(54) **PLANT ACTIVATOR**

(71) Applicant: IBIDEN CO., LTD., Ogaki-shi, Gifu 503-8604 (JP)
(72) Inventor: KARIYA, Satoru, Ogaki-shi, Gifu 5038604 (JP); ISHINO, Nobuyoshi, Ogaki-shi, Gifu 5038604 (JP); TAKADA, Kumiko, Ogaki-shi, Gifu 5038604 (JP)
(74) Representative: Hoefer & Partner Patentanwälte mbB
(86) International application number: PCT/JP2024/002079
(87) International publication number: WO 2025/158585

(57) **Abstract**

A plant activator which can increase seeds safely, stably and effectively when the plant activator is appropriately sprayed or applied by irrigation to a plant is provided. The plant activator contains at least one compound selected from an oxo fatty acid, a derivative thereof and a salt thereof and a terpene.

## Description

### TECHNICAL FIELD

The present invention relates to a plant activator.

### BACKGROUND ART

For the purpose of improving the supply efficiency of a cereal plant or a garden plant or another purpose, techniques for adjusting the growth of a plant have been developed. In addition to measures such as optimization of the temperature conditions and the sunshine conditions and fertilization, methods for activating a plant using a plant activator having a plant growth-regulating action, such as growth promotion, suppression of dormancy and suppression of stress, have been reported.

PTL 1 discloses a production method of a ketooctadecadienoic acid, which is known as a functional component exhibiting a fat-burning effect, by which a ketooctadecadienoic acid is produced efficiently using an enzyme. It is disclosed that the obtained ketooctadecadienoic acid can be used as a plant activator which exhibits a potent resistance-inducing effect.

PTL 2 discloses a method for predicting the soybean yield at an early stage by obtaining analysis data of one or more components selected from 2-hydroxypyridine, choline, citric acid, glyceric acid, glycine, L-pyroglutamic acid, malonic acid, sucrose and threitol, which are metabolites contained in leaves, in a soybean sample to be predicted and comparing with a yield prediction model.

PTL 3 describes a plant activator causing less soil pollution, having low toxicity and having an excellent resistance-inducing effect which is characterized by containing an oxo fatty acid derivative, a salt thereof or an ester as an active ingredient.

PTL 4 proposes a plant vitalizer containing one or more substances selected from (1) a fatty acid or a derivative thereof, (2) an organic acid or a derivative thereof, (3) a lipid or a derivative thereof, (4) an alcohol or a derivative thereof, (5) an amine or a derivative thereof, (6) an amino acid or a derivative thereof, (7) a protein or a derivative thereof, (8) a nucleic acid or a derivative thereof, (9) a terpene or a derivative thereof, (A) a natural product extract, (B) a fermentation product, (C) a fermentation residue and (I) a vitamin. As the terpene or the derivative thereof, orange oil, turpentine oil, mint oil, eucalyptus oil, camphor (d-camphor), dl-camphor, 1-menthol, dl-menthol, thymol and the like are listed.

### CITATION LIST

### PATENT LITERATURE

PTL 1: JP2020-25534A
PTL 2: JP2020-174553A
PTL 3: WO2018/168860
PTL 4: JP2001-288011A

### SUMMARY OF INVENTION

### TECHNICAL PROBLEM

Seeds, which are rich in starch and protein, are used as the staple food and the daily food of humans and animals, and increasing the yield thereof is highly important. A plant activator aiming at high yielding that can provide a higher growth promotion effect than the growth promotion effects of the plant activator described in PTL 1, which contains a ketooctadecadienoic acid as an active ingredient, and the plant activator described in PTL 3 and that can increase the seed yield stably and safely is required.

Although PTL 2 discloses that, by predicting the soybean yield, the efficiency of developing a yield-increasing technique can be improved considerably, no specific yield-increasing technique is disclosed. Moreover, the plant vitalizer of PTL 4 is insufficient as a yield-increasing technique.

The invention has been made in view of the problems, and an object thereof is to provide a plant activator which can increase seeds safely, stably and effectively when the plant activator is appropriately sprayed or applied by irrigation to a plant.

### SOLUTION TO PROBLEM

The invention relates to a plant activator characterized by containing a terpene, and at least one compound selected from an oxo fatty acid, a derivative thereof and a salt thereof.

The oxo fatty acid of the invention is a fatty acid having a carbonyl group on the carbon skeleton other than a carboxyl group and does not desirably have an α-ketol structure.

The oxo fatty acid is preferably an oxo fatty acid represented by the following formula (I) or the following formula (II).

HOOC-(R¹)-C_{β}H=C_{α}H-C(=O)-R² (I)

In the formula (I), R¹ represents a linear or branched, saturated or unsaturated hydrocarbon group containing six to twelve carbon atoms. R² represents an alkyl group having two to eight carbon atoms which may contain one or more branches and/or double bonds. C_{α} is an α-carbon which is the first adjacent to the carbonyl group to the R¹ side, and C_{β} is a β-carbon which is the second adjacent to the carbonyl group to the R¹ side.

HOOC-(R³)-C(=O)-C_{α}H=C_{β}H-R⁴ (II)

In the formula (II), R³ represents a linear or branched, saturated or unsaturated hydrocarbon group containing three to 10 carbon atoms. R⁴ represents a hydrocarbon group having four to 11 carbon atoms which may contain one or more branches and/or double bonds. C_{α} is an α-carbon which is the first adjacent to the carbonyl group to the R⁴ side, and C_{β} is a β-carbon which is the second adjacent to the carbonyl group to the R⁴ side.

In the formula (I), R¹ preferably contains a double bond which forms a conjugated double bond with the double bond between the α-carbon C_{α} and the β-carbon C_{β} in the formula (I), and in the formula (II), R⁴ preferably contains a double bond which forms a conjugated double bond with the double bond between the α-carbon C_{α} and the β-carbon C_{β} in the formula (II).

The oxo fatty acid represented by the formula (I) and the oxo fatty acid represented by the formula (II) are preferably ketooctadecadienoic acids.

In the formula (I), R¹ is preferably a linear or branched hydrocarbon group having nine carbon atoms, and R² is preferably an alkyl group having five carbon atoms. In the formula (II), R³ is preferably a linear or branched hydrocarbon group having seven carbon atoms, and R⁴ preferably has seven carbon atoms and has the structure CH₃-CH₂-CH₂-CH₂-CH₂-CH=CH-.

The oxo fatty acid is preferably at least one kind selected from the group consisting of 9-oxo-10,12-octadecadienoic acid, 13-oxo-9,11-octadecadienoic acid, 5-oxo-6,8-octadecadienoic acid, 6-oxo-9,12-octadecadienoic acid, 8-oxo-9,12-octadecadienoic acid, 10-oxo-8,12-octadecadienoic acid, 11-oxo-9,12-octadecadienoic acid, 12-oxo-9,13-octadecadienoic acid and 14-oxo-9,12-octadecadienoic acid.

The plant activator preferably contains at least two or more oxo fatty acids.

The plant activator preferably contains at least one oxo fatty acid represented by the formula (I) and at least one oxo fatty acid represented by the formula (II).

In the plant activator, the oxo fatty acid represented by the formula (I) is preferably 13-oxo-9,11-octadecadienoic acid, and the oxo fatty acid represented by the formula (II) is preferably 9-oxo-10,12-octadecadienoic acid.

In the plant activator, the weight ratio of the 9-oxo-10,12-octadecadienoic acid content to the 13-oxo-9,11-octadecadienoic acid content is preferably 0.3 to 2.0.

Moreover, in particular, the weight ratio of the 9-oxo-10,12-octadecadienoic acid content to the 13-oxo-9,11-octadecadienoic acid content is desirably 1.0 to 2.0. The weight ratio (9-oxo-10,12-octadecadienoic acid/13-oxo-9,11-octadecadienoic acid = 1.0 to 2.0) is particularly advantageous for flower bud formation of soybean.

The plant activator is preferably a plant activator which increases the production amount of at least one kind selected from the group consisting of 2-hydroxypyridine, glycine, L-pyroglutamic acid and sucrose.

The plant activator is preferably a plant activator which increases the production amount of a plant hormone.

In the plant activator, the plant hormone is preferably gibberellin.

The plant activator is preferably for promoting flower bud formation and/or improving a yield.

In the plant activator, the terpene is preferably a monoterpene, and α-pinene is most suitable.

The plant activator is preferably a plant activator which is used as a spray or an immersion agent that is brought into contact with a stem and a leaf or a root of a plant or an agent for soil irrigation.

The plant activator is preferably a plant activator for the *Poaceae* or a plant activator for the *Fabaceae.*

The plant activator preferably further contains a hydroxylated fatty acid, a derivative thereof or a salt thereof.

The hydroxylated fatty acid is preferably at least one kind selected from the group consisting of 9,10,13-trihydroxy-11-octadecenoic acid and 9,12,13-trihydroxy-10-octadecenoic acid.

"9,10,13-Trihydroxy-11-octadecenoic acid" is represented by the following structural formula (1).

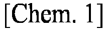

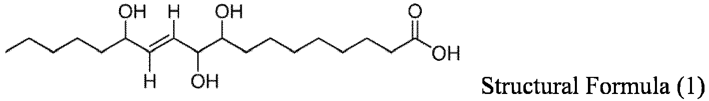

"9,12,13-Trihydroxy-10-octadecenoic acid" is represented by the following structural formula (2).

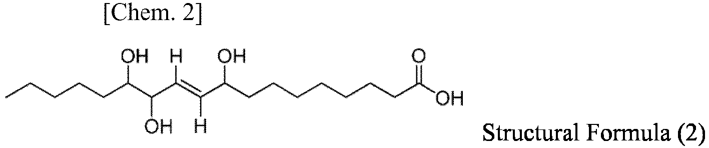

### ADVANTAGEOUS EFFECTS OF INVENTION

The plant activator of the invention has a high flower bud formation-promoting effect and an excellent yield-increasing effect.

### BRIEF DESCRIPTION OF DRAWINGS

[Fig. 1] A figure showing the analysis results of glycine in soybean leaves.
[Fig. 2] A figure showing the analysis results of sucrose in soybean leaves.
[Fig. 3] A figure showing the analysis results of 2-hydroxypyridine in soybean leaves.
[Fig. 4] A figure showing the analysis results of L-pyroglutamic acid in soybean leaves.
[Fig. 5] A figure showing the analysis results of gibberellin in soybean leaves.
[Fig. 6] A figure showing the analysis results of gibberellin in rice.
[Fig. 7] A figure showing the analysis results of gibberellin in soybean leaves in Comparative Example 5.
[Fig. 8] A figure showing the analysis results of glycine, sucrose, 2-hydroxypyridine and L-pyroglutamic acid in soybean leaves in Comparative Example 5.

### DESCRIPTION OF EMBODIMENTS

### Plant Activator

The plant activator of the invention is characterized by containing a terpene and at least one compound selected from an oxo fatty acid, a derivative thereof and a salt thereof.

The "plant activation" in the invention means adjustment to activate or maintain the growth activity of a plant in any form and is a concept including a plant growth-regulating action such as growth promotion (a concept including enlargement of stems and leaves, growth promotion of tubers or tuberous roots and the like), suppression of dormancy, induction or addition of resistance of a plant to stress (for example, a disease or the like) and anti-aging.

As shown in the Examples below, when the plant activator of the invention is applied to a plant body, the contents of components that are known to have a correlation with an increase in the seed yield and to be indicators of an increase in the yield are increased, and plant hormones which promote the formation of flower buds, the growth of ovaries or the like and the like can be increased. Accordingly, in the invention, the "plant activation" effect can particularly mean an effect of increasing the seed yield by promoting the growth of a plant and increasing the weight of seeds or the number of seeds per individual plant. The plant activation effect of the plant activator of the invention is extremely high, and as a result, an excellent yield-increasing effect and an improved harvesting efficiency can be exhibited in the plant to which the plant activator is applied.

The plant activator of the invention contains a terpene and at least one compound selected from an oxo fatty acid, a derivative thereof and a salt thereof as active ingredients for activating a plant.

More specifically, the plant activator of the invention is characterized by containing a terpene and at least one compound selected from an oxo fatty acid represented by the following formula (I) or the following formula (II), a derivative thereof and a salt thereof.

HOOC-(R¹)-C_{β}H=C_{α}H-C(=O)-R² (I)

In the formula (I), R¹ represents a linear or branched, saturated or unsaturated hydrocarbon group containing six to twelve carbon atoms. R² represents an alkyl group having two to eight carbon atoms which may contain one or more branches and/or double bonds. C_{α} is an α-carbon which is the first adjacent to the carbonyl group to the R¹ side, and C_{β} is a β-carbon which is the second adjacent to the carbonyl group to the R¹ side.

HOOC-(R³)-C(=O)-C_{α}H=C_{β}H-R⁴ (II)

In the formula (II), R³ represents a linear or branched, saturated or unsaturated hydrocarbon group containing three to 10 carbon atoms. R⁴ represents a hydrocarbon group having four to 11 carbon atoms which may contain one or more branches and/or double bonds. C_{α} is an α-carbon which is the first adjacent to the carbonyl group to the R⁴ side, and C_{β} is a β-carbon which is the second adjacent to the carbonyl group to the R⁴ side.

Here, the oxo fatty acid and the compound represented by the formula (I) or (II) include all the geometric isomers and the stereoisomers thereof having the same structural formulae. When used in the present specification, the term "stereoisomer" can refer to any of various stereoisomeric configurations which can exist for a compound of this disclosure. For example, the compound represented by the formula (I) or (II) of this disclosure can contain a double bond, and the substituents here can be in the E or Z configuration.

Preferably, in the oxo fatty acid contained in the plant activator of the invention, for example, R¹ in the formula (I) can contain a double bond which forms a conjugated double bond with the double bond between the α-carbon C_{α} and the β-carbon C_{β} in the formula (I). Moreover, R⁴ in the formula (II) can contain a double bond which forms a conjugated double bond with the double bond between the α-carbon C_{α} and the β-carbon C_{β} in the formula (II).

Preferable examples of the oxo fatty acid are a ketooctadecadienoic acid and the like. Further preferably, in the formula (I), R¹ can be a linear or branched hydrocarbon group having nine carbon atoms, and R² can be an alkyl group having five carbon atoms. Moreover, in the formula (II), R³ can be a linear or branched hydrocarbon group having seven carbon atoms, and R⁴ preferably has the structure CH₃-CH₂-CH₂-CH₂-CH₂-CH=CH- when R⁴ has seven carbon atoms.

For example, specific examples of the ketooctadecadienoic acid include 9-oxo-10,12-octadecadienoic acid (9-oxoODA), 13-oxo-9,11-octadecadienoic acid (13-oxoODA), 5-oxo-6,8-octadecadienoic acid, 6-oxo-9,12-octadecadienoic acid, 8-oxo-9,12-octadecadienoic acid, 10-oxo-8,12-octadecadienoic acid, 11-oxo-9,12-octadecadienoic acid, 12-oxo-9,13-octadecadienoic acid, 14-oxo-9,12-octadecadienoic acid and the like. The "active ingredients" in the present specification mean the oxo fatty acid and the terpene, including the listed specific examples. The oxo fatty acid has a property of activating the growth of a plant, and when the plant activator of the invention containing an oxo fatty acid, a derivative thereof or a salt thereof and a terpene as active ingredients is brought into contact with a part of stems and leaves or roots of a plant, the seed yield of the plant can be increased. The plant activator of the invention preferably contains at least two or more kinds of oxo fatty acids, derivatives thereof or salts thereof as the oxo fatty acid, the derivative thereof or the salt thereof, which is one of the active ingredients.

The derivative of the oxo fatty acid is desirably an ester. The ester of the oxo fatty acid of the invention may be a methyl ester, an ethyl ester, a propyl ester, a butyl ester, a pentyl ester, an isopentyl ester, an octyl ester or the like, although the ester is not limited thereto.

The salt of the oxo fatty acid is not particularly limited as long as the salt is one or more agriculturally acceptable salts, including alkali metal salts such as sodium salt and potassium salt, ammonium salts such as ammonium salt and alkyl ammonium salts including tetramethylammonium salts and the like and the like.

The plant activator of the invention may contain at least two or more oxo fatty acids as active ingredients. When two or more oxo fatty acids are combined, the plant activator of the invention sometimes exhibits a higher plant activation effect. For example, the two oxo fatty acids can be a combination of at least one oxo fatty acid represented by the formula (I) and at least one oxo fatty acid represented by the formula (II). For example, the two oxo fatty acids may be preferably a combination of 9-oxo-10,12-octadecadienoic acid (9-oxoODA) and 13-oxo-9,11-octadecadienoic acid (13-oxoODA).

In an embodiment of the invention, the plant activator of the invention contains 13-oxo-9,11-octadecadienoic acid, a salt thereof or a derivative thereof and 9-oxo-10,12-octadecadienoic acid, a salt thereof or a derivative thereof as the oxo fatty acids. For example, the weight ratio of the content of 9-oxo-10,12-octadecadienoic acid, the salt thereof or the derivative thereof to the content of 13-oxo-9,11-octadecadienoic acid, the salt thereof or the derivative thereof is around 0.1 to 10, preferably around 0.3 to 2.0.

The terpene contained in the plant activator of the invention is a precursor in biosynthesis of a plant hormone related to an increase in the seed yield. Accordingly, because a terpene is contained as an active ingredient in addition to at least one compound selected from an oxo fatty acid, a derivative thereof or a salt thereof, the plant activator of the invention can further improve biosynthesis of a plant hormone in addition to having a plant growth effect due to the at least one compound selected from an oxo fatty acid, a derivative thereof or a salt thereof.

As the terpene, any terpene can be used suitably, but a monoterpene, a sesquiterpene, a diterpene and derivatives thereof are preferable. In particular, as preferable examples, monoterpenes such as α-pinene, β-pinene, silvestrene and limonene are core substances of plant hormones and are thus desirable. Terpineol may be further contained. Isomers of terpineol include α-terpineol, β-terpineol and γ-terpineol, but α-terpineol is further preferable. For example, general commercial terpineol contains α-terpineol as the main component and is sometimes a mixture with β-terpineol and γ-terpineol. When α-terpineol is mainly contained, a mixture of isomers can be used directly. Pine oil containing α-pinene as the main component and the like can be used suitably in the invention.

Even with the addition of the terpene of the invention, the excellent growth promotion effect that the plant activator containing an oxo fatty acid, a derivative thereof or a salt thereof has does not decrease or is not lost. Furthermore, the terpene is a naturally existing compound and has a low load on the environment, and the addition of the terpene does not adversely affect the plant body for application. Accordingly, with the addition of the terpene of the invention, biosynthesis of a plant hormone is further promoted while the excellent activation effect of the plant activator containing an oxo fatty acid, a derivative thereof or a salt thereof is maintained. Thus, the significant yield-increasing effect of the plant activator of the invention can be achieved.

In the invention, the terpene can be contained in the plant activator at a weight ratio of around 10 times or less the amount, based on the content of the oxo fatty acid, the derivative thereof or the salt thereof. The preferable concentration of the terpene which can be contained in the plant activator of the invention can depend on the species and the condition of the plant for application, and the lower limit of the terpene concentration is not particularly limited. However, the terpene is preferably contained at a weight ratio of around 0.5 times or more the amount, based on the content of the oxo fatty acid, the derivative thereof or the salt thereof. In a preferable embodiment of the invention, the weight ratio of the terpene can be around one to three times the amount based on the content of the oxo fatty acid, the derivative thereof or the salt thereof.

For example, in the plant activator of the invention in an embodiment, the at least one compound selected from an oxo fatty acid, a derivative thereof or a salt thereof can be used at a concentration of 5 mg/L or less. The preferable concentration of the at least one compound selected from an oxo fatty acid, a derivative thereof or a salt thereof depends on the cultivation condition and the growth stage of the plant for application, the timing of application and the application method of the plant activator or the like and can be appropriately set to be suitable for the application amount, but when the concentration exceeds 5 mg/L, damage on the plant may be caused. The lower limit of the concentration of the at least one compound selected from an oxo fatty acid, a derivative thereof or a salt thereof is not particularly limited but is preferably 0.05 mg/L or more. In a preferable embodiment of the invention, the at least one compound selected from an oxo fatty acid, a derivative thereof or a salt thereof is at 0.05 to 5 mg/L.

An additive component such as a compatible surfactant and/or diluent or a carrier which is suitable for use as a plant activator may be contained in the plant activator of the invention according to the need. For example, with a diluent, the dispersibility of the at least one compound selected from an oxo fatty acid, a derivative thereof or a salt thereof in a solvent sometimes improves. Moreover, to improve the solubility or the dispersibility of the oxo fatty acid derivative used in the invention in a diluent, for example, a surfactant such as a dispersing agent and a wetting agent or the like may be contained. Such an additive component is not particularly limited as long as it is an agriculturally acceptable chemical. Moreover, the plant activator of the invention may further contain a component which is generally used for an agricultural preparation or the like, such as a pH-adjusting agent, a spreader for improving spreading to the plant body or the soil, a binder and an antioxidant, or another component which is beneficial to the plant, such as one or more fertilizer components, other than a surfactant, a diluent and a carrier, in addition to the at least one compound selected from an oxo fatty acid, a derivative thereof and a salt thereof and the terpene.

The plant activator of the invention contains the at least one compound selected from an oxo fatty acid, a derivative thereof or a salt thereof in addition to the terpene, and the origins thereof and the like are not particularly limited. The oxo fatty acid, the derivative thereof or the salt thereof of the invention, such as a ketooctadecadienoic acid, may be, for example, one obtained by chemical synthesis or may also be, for example, one produced using a microorganism, one obtained by causing an enzyme derived from a microorganism to act on a substrate such as a fatty acid or the like. The plant activator of the invention contains the at least one compound selected from an oxo fatty acid, a derivative thereof or a salt thereof at a desirable concentration. For example, when an oxo fatty acid produced using a microorganism is used as the oxo fatty acid derivative, a mixture containing the oxo fatty acid may be used for the plant activator. When a biosurfactant or the like secreted from the microorganism is contained in the mixture, the dispersibility of the plant activator of the invention may be improved even when the additive component described above is not contained. When the oxo fatty acid or the derivative thereof itself is insoluble, the oxo fatty acid or the derivative thereof can be sometimes emulsified by the biosurfactant and dispersed in water.

In an embodiment of the invention, the plant activator of the invention may further contain a hydroxylated fatty acid, a derivative thereof or a salt thereof in addition to the at least one compound selected from an oxo fatty acid, a derivative thereof and a salt thereof and the terpene as active ingredients. A plant activator having a higher activation effect is sometimes obtained.

As the hydroxylated fatty acid, the derivative thereof or the salt thereof, a hydroxylated fatty acid having the structural formula represented by the following formula (III) and/or (IV), a derivative thereof or a salt thereof can be suitably used.

HOOC-(R⁵)-CH(OH)-CH(OH)-CH=CH-CH(OH)-R⁶ (III)

HOOC-(R⁵)- CH(OH)-CH=CH-CH(OH)-CH(OH)-R⁶ (IV)

In the formula (III) and/or (IV), R⁵ is a linear or branched hydrocarbon group having four to twelve carbon atoms and may contain one or more double bonds and/or OH groups, and when a double bond is contained, the position of the double bond is not limited. R⁶ is a linear or branched hydrocarbon group having two to eight carbon atoms and may contain one or more double bonds and/or OH groups, and when a double bond is contained, the position of the double bond is not limited.

Here, as the derivative or the salt of the hydroxylated fatty acid, those exemplified above as the derivative or the salt of the oxo fatty acid can be suitably used. Moreover, the hydroxylated fatty acid of this disclosure includes all the geometric isomers and the stereoisomers of the compound represented by the formula (III) and/or (IV).

In an embodiment of the invention, the hydrocarbon group of R⁵ in the formula (III) and/or (IV) has six to eight carbon atoms, and the hydrocarbon group of R⁶ has four to six carbon atoms. Moreover, in another embodiment, R⁵ in the hydroxylated fatty acid has a structure of -(CH₂)ₙ- (n is an integer of 4 to 12), and R⁶ has a structure of CₙH₂ₙ₊₁- (n is an integer of 2 to 8). Furthermore, in another embodiment, R⁵ in the hydroxylated fatty acid is preferably an alkylene group having seven carbon atoms (-(CH₂)₇-), and R⁶ is preferably an alkyl group having five carbon atoms (CH₃CH₂CH₂CH₂CH₂-).

Preferably, the hydroxylated fatty acid of this disclosure can be at least one kind selected from the group consisting of 9,10,13-trihydroxy-11-octadecenoic acid and 9,12,13-trihydroxy-10-octadecenoic acid but is not limited thereto.

As described above, the plant activator of the invention, which contains the terpene and the at least one compound selected from an oxo fatty acid, a derivative thereof and a salt thereof, is characterized by exhibiting a significantly excellent plant activation effect which promotes the growth of seeds of a plant and increases the seed yield when the plant activator is applied to a plant. As components which are compounds having an excellent correlation with an increase in the seed yield and in which an increase in the contents thereof is an indicator of an increase in the seed yield, for example, compounds such as 2-hydroxypyridine, glycine, L-pyroglutamic acid and sucrose are known. It is said that the existing amounts of these components in the leaves and the seed yield have a positive correlation.

The plant activator of the invention can increase the 2-hydroxypyridine, glycine, L-pyroglutamic acid and/or sucrose contents of the leaves in the plant to which the plant activator is applied. The results show that the plant activator of the invention can promote the growth of seeds of a plant and increase the weight of seeds and the number of seeds per individual plant. That is, the plant activator of the invention is a yield-increasing agent. Here, the "increase in the yield" of seeds means that the harvested seeds increase and means, for example, the weight of seeds and/or the number of seeds per individual plant increase compared to those of the plant group which has not been treated with the plant activator of the invention.

The plant activator of the invention can also increase the amount of a plant hormone contained in the leaves related to an increase in the seed yield, in the plant to which the plant activator is applied. The plant activator of the invention can increase, for example, the amount of gibberellin, which is a plant hormone having a physiological action of promoting flower bud formation and promoting the growth of ovaries, contained in the leaves. The seed yield has a positive correlation with the pod number, and the pod number is known to have a close positive correlation with the flower bud number. Accordingly, an increase in the amount of gibberellin, which can promote development of flower clusters, can lead to an increase in the flower bud number and the pod number and also in the yield as a result. That is, the plant activator of the invention can induce an increase in biosynthesis of gibberellin and is thus a flower bud formation-promoting agent.

The plant activator of the invention can be suitably used for increasing the yield of grain, for example, although it is not limited thereto. The grain is not particularly restricted and can be appropriately selected depending on the purpose. For example, the plant activator of the invention may be applied to a *Poaceae* plant, a *Fabaceae* plant or the like and can suitably achieve high yielding of the seed yield thereof. For example, specific examples of the *Poaceae* plant include grains such as wheat, barley, rye, oats and naked barley, rice, sorghum, corn, foxtail millet, millet, barnyard millet, finger millet, pearl millet, lawn grass and the like. Moreover, specific examples of the *Fabaceae* plant include, for example, soybean, adzuki bean, mung bean, cowpea, kidney bean, lima bean, peanut, pea, broad bean and the like, but the *Fabaceae* plant is not limited thereto. The plant activator of the invention can be suitably used also for a plant other than the *Poaceae* plants and the *Fabaceae* plants to increase the seed yield.

Of the *Poaceae* plants and the *Fabaceae* plants, the plant activator of the invention can be suitably used for rice and soybean. The kind of rice is not particularly restricted and can be appropriately selected depending on the purpose, and examples thereof include sake rice such as Hakutsurunishiki, Yamada Nishiki, Gohyakumangoku, Miyamanishiki, Omachi, Hattan, Hattan Nishiki, Ginpu, Yumesansa, Wakamizu and Yumenokaori, table rice such as Nipponbare, Koshihikari, Hitomebore, Hinohikari, Akitakomachi, Kinuhikari, Nanatsuboshi and Haenuki and the like.

Moreover, in the present specification, the soybean means soybean (scientific name: *Glycine max*)*,* which is an annual plant of the *Fabaceae.* There are many varieties of soybean, but the plant activator for soybean of the invention can be suitably used, for example, for any of domestic soybeans such as Fukuyutaka, Enrei, Satonohohoemi, Yuagarimusume, Ryuhou, Suzuyutaka, Toyohomare and Miyagishirome, soybeans produced in the U.S. such as IOM (Indiana, Ohio and Michigan) and the like. Furthermore, the soybean may be genetically modified or non-genetically modified.

The plant activator of the invention can be applied to a plant by any method. The application method is not particularly limited as long as it is a method for bringing into contact with the plant body such as roots, stems and leaves of the plant, and the plant activator acts suitably as an activator for promoting flower bud formation and/or improving the yield in plant cultivation. The plant activator of the invention may be applied in such a manner that the plant activator comes into direct contact with a plant body or may be applied to a cultivation carrier in which the plant body takes root, such as soil and a medium. For example, the plant activator of the invention can be used as a spray or an immersion agent that is brought into contact with stems and leaves or roots of a plant or an agent for soil irrigation. The specific application method can be appropriately selected depending on the cultivation form of the plant for application or the like, but examples thereof can include surface treatment such as ground spraying of a liquid agent, ground spraying of a solid, aerial spraying of a liquid agent, aerial spraying of a solid, spraying to a liquid surface, indoor application, application by mixing in the soil, soil irrigation application and coating treatment, application to a nursery box, individual flower treatment, plant foot treatment and the like. Moreover, the plant activator of the invention may be mixed with a fertilizer component of a plant and used as a plant fertilizer. Furthermore, the plant activator of the invention may be contained in a porous structure or capsules or impregnated in a sheet or the like and used as a controlled release agent. The form of the plant activator of the invention is not particularly limited. The plant activator of the invention may be in the form of liquid or gel or the form of solid state (blocks, powder, granules or the like). In the case of a liquid composition, the liquid composition can be used as it is or as a concentrate type which is diluted before use. The plant activator of the invention gives a plant growth promotion effect to a plant in the cultivation of the plant and achieves an increase in the seed yield through an increase in the plant body such as an increase in the crop weight and high yielding of seeds and improvement of the harvesting efficiency by exhibiting a flower bud formation-promoting action or the like in the plant to which the plant activator has been applied.

The plant activator of the invention can achieve improvement of the seed yield through simple treatment such as spraying and thus does not require preparation of a special facility or the like, and thus the invention is extremely advantageous also in this regard. Furthermore, the oxo fatty acid or the like is an oxide of a naturally existing fatty acid, and the terpene is also a naturally existing compound as described above. Thus, the plant activator of the invention is excellent also because the environmental load of the plant activator of the invention is low and because there is almost no damage to the plant to which the plant activator is applied.

The plant activator of the invention can be applied to a plant body and/or a cultivation carrier, for example, by a method in which the at least one compound selected from an oxo fatty acid, a derivative thereof or a salt thereof in the liquid state in which the compound is dissolved or dispersed in water and/or a water-soluble solvent is applied to the plant body and/or the cultivation carrier. For example, a liquid in which the at least one compound selected from an oxo fatty acid, a derivative thereof or a salt thereof is dissolved or dispersed can be sprayed or coated on the aboveground part (stems, leaves and the like) of the subject plant body. The plant activator of the invention is applied to the subject plant at least once, for example, before flowering or may also be applied several times.

### EXAMPLES

The invention is explained based on Examples, but the invention is not limited only to the Examples.

### [Example 1]

### · Preparation of Growth Promotion Agent Liquid 1

As a raw material containing a fatty acid, 580 g of linoleic acid with a purity of 90% (manufactured by NOF CORPORATION) was used, and a test solution was prepared by adding 216 g of potassium carbonate (manufactured by FUJIFILM Wako Pure Chemical Corporation), 280 g of dipotassium hydrogen phosphate (manufactured by FUJIFILM Wako Pure Chemical Corporation) and 13000 mL of distilled water thereto. The pH of the test solution at this point was 9.0.

After 40 mg of lipoxygenase (manufactured by NACALAI TESQUE, INC., derived from soybean) was added to the test solution and reacted at 15°C for three hours with aeration with oxygen and stirring, the reaction mixture was placed in a hot water bath at 90°C for 90 minutes. The obtained reaction solution was named a liquid A.

The pH was adjusted to 7.0 by adding 35 mL of phosphoric acid (manufactured by FUJIFILM Wako Pure Chemical Corporation) to 6500 mL of the liquid A. After reaction was conducted at 50°C for 22 hours with aeration of the solution with oxygen and stirring, the reaction mixture was placed in a hot water bath at 90°C for two hours. The obtained reaction liquid was named a liquid B.

The total amount of the liquid B obtained above and the total amount of the liquid A which was not used and remained after the preparation of the liquid B were mixed, and the obtained mixture solution was quantified by liquid chromatography-mass spectrometry (LC-MS) using MS² spectrum analysis using 13-oxoODA (13-oxo-9,11-octadecadienoic acid) and 9-oxoODA (9-oxo-10,12-octadecadienoic acid) manufactured by Cayman Chemical Company and 9,10,13-trihydroxy-11-octadecenoic acid (9,10,13-trihydroxy-11-octadecenoic acid) and 9,12,13-trihydroxy-10-octadecenoic acid (9,12,13-trihydroxy-10-octadecenoic acid) manufactured by Larodan Fine Chemicals as standard substances.

The ketooctadecadienoic acids (13-oxoODA and 9-oxoODA) and the trihydroxyoctadecenoic acids were measured at a detection wavelength of UV 272 nm and a detection wavelength of UV 210 nm, respectively, by the absolute calibration method.

13-oxoODA with a yield of 3.7% as the total yield of isomers such as (E,E-isomer) and (E,Z-isomer) was obtained. The yield of 9-oxoODA at this point was 1.7%. Moreover, the total yield of 9,10,13-trihydroxy-11-octadecenoic acid and 9,12,13-trihydroxy-10-octadecenoic acid was 1.2% (the peaks could not be separated by LC-MS), and the recovery rate of linoleic acid was 84.1%.

Here, the yields (%) were determined based on the following equation. Yield (%) = (wt% of 13-oxoODA, 9-oxoODA, 9,10,13-trihydroxy-11-octadecenoic acid or 9,12,13-trihydroxy-10-octadecenoic acid produced)/(initial wt% of used raw material linoleic acid)

The mixture liquid of the liquid A and the liquid B obtained above in a volume of 0.1 mL was diluted to 2000 mL with ion-exchanged water, and a solution obtained by adding 40 µL of pine oil (manufactured by ease, the main component was α-pinene) to the diluted solution was prepared as a growth promotion agent liquid 1 (9-oxoODA/13-oxoODA<1).

### · Growth Promotion Effect on Rice

Seed rice (variety: Nipponbare) was dipped in water for five days in a plant growth chamber (LH-60FL3-DT: manufactured by Nippon Medical & Chemical Instruments Co., Ltd.) at a temperature of 15°C with the lights out, and then the temperature was kept at 30°C for half a day. The obtained seed rice in the pigeon breast-like shape (seed rice which expanded evenly with a plumule) was seeded in a 72-cell tray filled with sterilized "Tanemaki Baido" (manufactured by Takii & Co., Ltd), each four seeds per cell. The rice was grown until the 1- to 1.5-leaf stage in a plant growth chamber with a daily cycle of 14 hours at a temperature of 28°C with fluorescent lights and 10 hours at a temperature of 23°C with the lights out.

The above growth promotion agent liquid 1 (9-oxoODA/13-oxoODA<1) was sprayed to the leaf surfaces of the rice of 20 plants seven days after seeding, at 1 mL per plant, using a spray bottle.

The aboveground parts of five samples, which included two plants per sample, were cut 24 hours after spraying, weighed (fresh weight: FW) in 15-mL centrifuge tubes with cap, immediately transferred to a fridge at -80°C and frozen for 24 hours.

A mixture liquid of ethanol:water:acetic acid = 80:20:1 was added to the frozen samples in such a manner that the concentrations of the frozen samples became 0.1 g/1 mL, and the samples were crushed with beads and then subjected to ultrasonic treatment for 10 minutes. The samples were left still for an hour and centrifuged with a centrifuge (himac CT6E: manufactured by Eppendorf Himac Technologies Co., Ltd.) at 3000 rpm for five minutes, and the supernatants were filtered with a membrane filter and used as the analysis samples.

A plant hormone of the analysis samples was analyzed under the following conditions with a liquid chromatography-mass spectrometry (LC-MS/MS) device (LC part: DIONEX Ultimate3000, MS/MS part: Q Exactive Focus: manufactured by Thermo Fisher Scientific Inc.). Column = Aclaim PR-MS 2.1 mmφ × 150 mm (manufactured by Thermo Fisher Scientific Inc.), solvent = 2% acetonitrile/acetic acid in water → 95% acetonitrile/acetic acid in water, flow rate = 0.25 mL/min., column temperature = 40°C, detection = MS-(SIM), and introduction = sample liquid 2 µL.

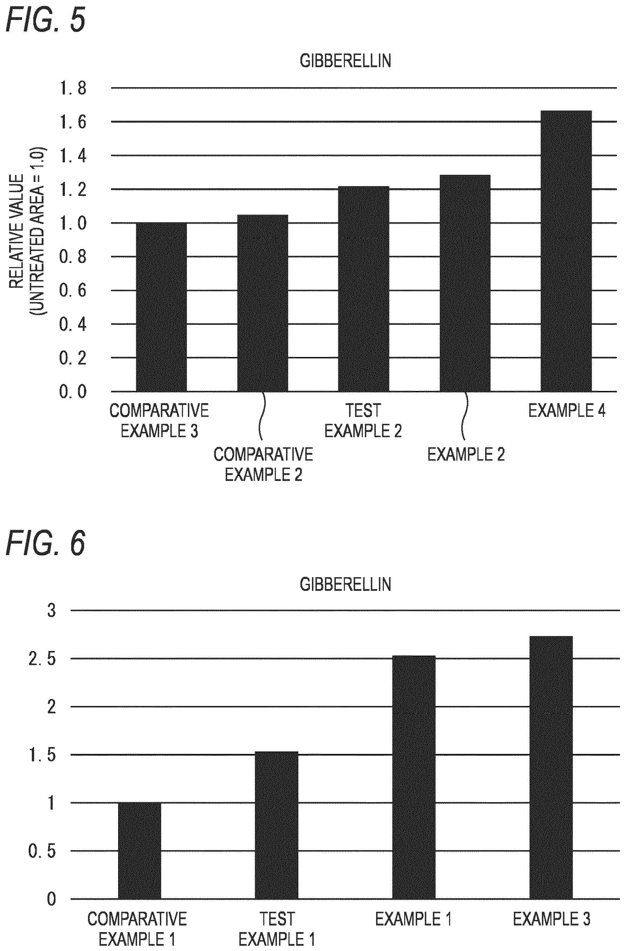

A calibration curve was created using gibberellin A1 (manufactured by Toronto) as the standard substance of gibberellin. Using the created calibration curve, the gibberellin contents of the analysis samples were measured from the MS- peak area values of the analysis samples. The gibberellin content of the rice sample 24 hours after spraying was 0.38 ng/gFW. The quantification results of gibberellin shown in a graph of the relative value, where the value of Comparative Example 1 described below was regarded as 1.0, are shown in Fig. 6.

### [Example 2]

### · Growth Promotion Effect on Soybean

Seeds of soybean (variety: Fukuyutaka) were seeded in pots in size three (9 cm in diameter) filled with "Yasai To Hana No Tanemaki Baido" (manufactured by Takii & Co., Ltd), each four seeds per pot. The seeds were grown for 30 days in a plant growth chamber (LH-60FL3-DT: manufactured by Nippon Medical & Chemical Instruments Co., Ltd.) with a daily cycle of 14 hours at a temperature of 25°C with fluorescent lights and 10 hours at a temperature of 20°C with the lights out.

The growth promotion agent liquid 1 (9-oxoODA/13-oxoODA<1) prepared in Example 1 was sprayed to the leaf surfaces of the soybean of 20 plants 30 days after seeding, at 1 mL per plant, using a spray bottle.

The parts including the growing points to the new leaves of five samples, which included two plants per sample, were cut 24 hours after spraying, weighed (fresh weight: FW) in 15-mL centrifuge tubes with cap, immediately transferred to a fridge at -80°C and frozen for 24 hours.

The frozen samples were treated in the same manner as in Example 1 and used as the analysis samples.

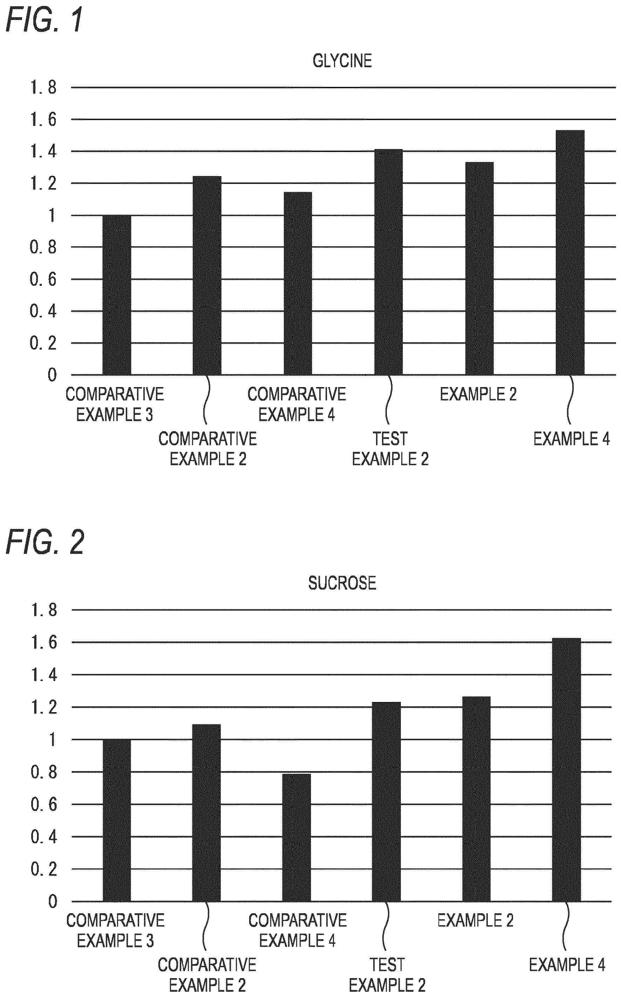

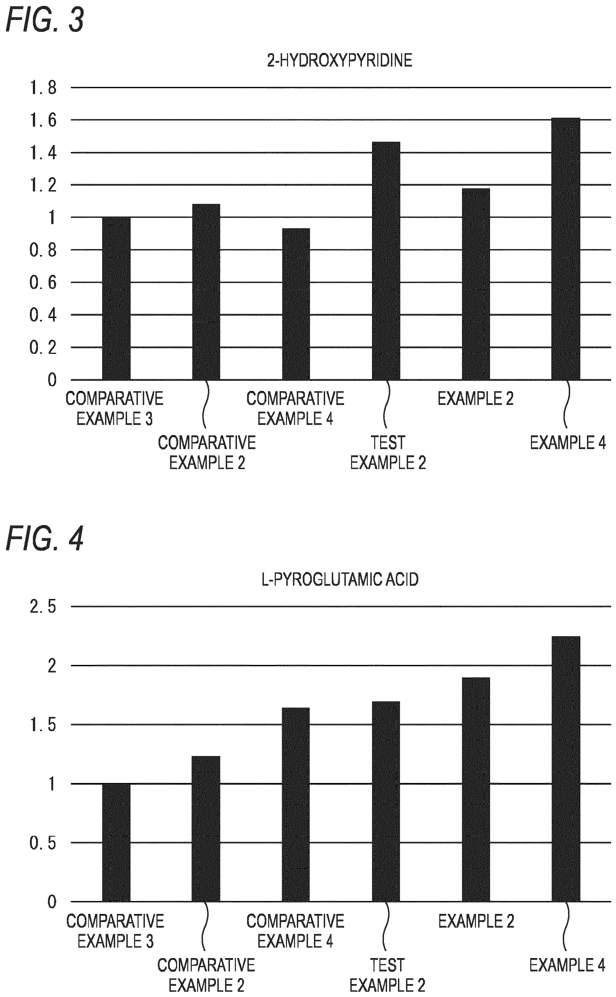

Glycine, sucrose, 2-hydroxypyridine and L-pyroglutamic acid of the analysis samples were analyzed under the following conditions with an LC-MS/MS device. Column = Aclaim PR-MS 2.1 mmφ × 150 mm (manufactured by Thermo Fisher Scientific Inc.), solvent = 2% acetonitrile/acetic acid in water → 10% acetonitrile/acetic acid in water, flow rate = 0.25 mL/min., column temperature = 40°C, detection = MS-(SIM), and introduction = sample liquid 2 µL. Calibration curves were created using glycine (manufactured by FUJIFILM Wako Pure Chemical Corporation), sucrose (manufactured by FUJIFILM Wako Pure Chemical Corporation), 2-hydroxypyridine (manufactured by Tokyo Chemical Industry Co., Ltd.) and L-pyroglutamic acid (manufactured by NACALAI TESQUE, INC.) as standard substances, and glycine, sucrose, 2-hydroxypyridine and L-pyroglutamic acid in the analysis samples were measured from the MS- peak area values using the created calibration curves. The results were shown in graphs of the relative values, where the values of Comparative Example 3 described below (an example in which water was applied instead of the growth promotion agent liquid) were regarded as 1.0. The quantification results of glycine, sucrose, 2-hydroxypyridine and L-pyroglutamic acid are shown in Figs. 1 to 4, respectively.

Moreover, the gibberellin amounts of the analysis samples were measured in the same manner as in Example 1. The gibberellin content of the soybean sample 24 hours after spraying was 4.0 ng/gFW. The quantification results of gibberellin shown in a graph of the relative value, where the value of Comparative Example 3 described below (an example in which water was applied instead of the growth promotion agent liquid) was regarded as 1.0, are shown in Fig. 5.

### [Example 3]

### · Preparation of Growth Promotion Agent Liquid 2

As a raw material containing a fatty acid, 580 g of linoleic acid with a purity of 90% (manufactured by NOF CORPORATION) was used, and a test solution was prepared by adding 216 g of potassium carbonate (manufactured by FUJIFILM Wako Pure Chemical Corporation), 280 g of dipotassium hydrogen phosphate (manufactured by FUJIFILM Wako Pure Chemical Corporation) and 13000 mL of distilled water thereto. The pH of the test solution at this point was 9.0.

After 40 mg of lipoxygenase (manufactured by NACALAI TESQUE, INC., derived from soybean) was added to the test solution and reacted at 15°C for three hours with stirring, the reaction mixture was placed in a hot water bath at 90°C for 90 minutes. The pH was adjusted to 7.0 by adding 35 mL of phosphoric acid (manufactured by FUJIFILM Wako Pure Chemical Corporation) thereto. After reaction was conducted at 50°C for 22 hours with aeration of the solution with oxygen and stirring, the reaction mixture was placed in a hot water bath at 90°C for two hours.

The obtained reaction solution after the completion of the reaction was quantified by LC-MS using MS² spectrum analysis using 13-oxoODA and 9-oxoODA manufactured by Cayman Chemical Company and 9,10,13-trihydroxy-11-octadecenoic acid and 9,12,13-trihydroxy-10-octadecenoic acid manufactured by Larodan Fine Chemicals as standard substances. The ketooctadecadienoic acids (13-oxoODA and 9-oxoODA) and the trihydroxyoctadecenoic acids were measured at a detection wavelength of UV 272 nm and a detection wavelength of UV 210 nm, respectively, by the absolute calibration method.

13-oxoODA with a yield of 3.3% as the total yield of isomers such as (E,E-isomer) and (E,Z-isomer) was obtained. The yield of 9-oxoODA at this point was 6.5%. Moreover, the total yield of 9,10,13-trihydroxy-11-octadecenoic acid and 9,12,13-trihydroxy-10-octadecenoic acid was 0.63% (the peaks could not be separated by LC-MS), and the recovery rate of linoleic acid was 80.2%.

The reaction solution obtained above in a volume of 0.1 mL was diluted to 2000 mL with ion-exchanged water, and a solution obtained by adding 40 µL of pine oil (manufactured by ease) to the diluted solution was prepared as a growth promotion agent liquid 2 (9-oxoODA/13-oxoODA>1).

In the same manner as in Example 1, the growth promotion agent liquid 2 was sprayed to rice, and sample collection and extraction and component analysis of the obtained analysis samples were conducted. The gibberellin content of the rice sample 24 hours after spraying was 0.41 ng/gFW. The quantification results of gibberellin shown in a graph of the relative value, where the value of Comparative Example 1 described below was regarded as 1.0, are shown in Fig. 6.

### [Example 4]

### · Growth Promotion Effect on Soybean

The growth promotion agent liquid 2 (9-oxoODA/13-oxoODA> 1) which was prepared in the same manner as in Example 3 was sprayed to soybean in the same manner as in Example 2, and sample collection and extraction and component analysis of the obtained analysis samples were conducted.

The amounts of glycine, sucrose, 2-hydroxypyridine and L-pyroglutamic acid in the soybean sample 24 hours after spraying were measured in the same manner as in Example 2. The results were shown in graphs of the relative values, where the values of Comparative Example 3 described below (an example in which water was applied instead of the growth promotion agent liquid) were regarded as 1.0. The quantification results of glycine, sucrose, 2-hydroxypyridine and L-pyroglutamic acid are shown in Figs. 1 to 4, respectively.

The gibberellin content of the soybean sample 24 hours after spraying was 5.2 ng/gFW. The quantification results of gibberellin shown in a graph of the relative value, where the value of Comparative Example 3 described below (an example in which water was applied instead of the growth promotion agent liquid) was regarded as 1.0, are shown in Fig. 5.

### [Comparative Example 1]

A solution obtained by diluting 0.1 mL of a mixture liquid of the liquid A and the liquid B (9-oxoODA/13-oxoODA<1, without the addition of pine oil) which was prepared in the same manner as in Example 1 to 2000 mL with ion-exchanged water was used as a comparison solution 1.

In the same manner as in Example 1, the comparison solution 1 was sprayed to rice, and sample collection and extraction and component analysis of the obtained analysis samples were conducted. The gibberellin content of the rice sample 24 hours after spraying was 0.15 ng/gFW. The analysis results of Examples 1 and 3 and Test Example 1 described below were shown with the relative values based on the analysis results regarded as 1.0. The results are shown in Fig. 6.

### [Comparative Example 2]

The comparison solution 1 which was prepared in the same manner as in Comparative Example 1 was sprayed to soybean in the same manner as in Example 2, and sample collection and extraction and component analysis of the obtained analysis samples were conducted.

The amounts of glycine, sucrose, 2-hydroxypyridine and L-pyroglutamic acid in the soybean sample 24 hours after spraying were measured in the same manner as in Example 2. The results were shown in graphs of the relative values, where the values of Comparative Example 3 described below (an example in which water was applied instead of the growth promotion agent liquid) were regarded as 1.0. The quantification results of glycine, sucrose, 2-hydroxypyridine and L-pyroglutamic acid are shown in Figs. 1 to 4, respectively.

The gibberellin content of the soybean sample 24 hours after spraying was 3.2 ng/gFW. The quantification results of gibberellin shown in a graph of the relative value, where the value of Comparative Example 3 described below (an example in which water was applied instead of the growth promotion agent liquid) was regarded as 1.0, are shown in Fig. 5.

### [Comparative Example 3]

Ion-exchanged water was used instead of the growth promotion agent liquid 1 of Example 2, and ion-exchanged water was sprayed on the leaf surfaces of soybean in the same manner as in Example 2. Then, sample collection and extraction and component analysis of the obtained analysis samples were conducted in the same manner as in Example 2.

The analysis results of Examples 2 and 4, Comparative Example 2 and Test Example 2 described below were shown with the relative values based on the analysis results of glycine, sucrose, 2-hydroxypyridine and L-pyroglutamic acid in the soybean sample 24 hours after spraying regarded as 1.0. The results are shown in Figs. 1 to 4, respectively.

The gibberellin content of the soybean sample 24 hours after spraying was 3.1 ng/gFW. The results showing the analysis results of Examples 2 and 4, Comparative Example 2 and Test Example 2 described below with the relative values based on the analysis results regarded as 1.0 are shown in Fig. 5.

### [Comparative Example 4]

Pine oil (manufactured by ease) alone was used instead of the growth promotion agent liquid 1 of Example 2, and pine oil was sprayed on the leaf surfaces of soybean in the same manner as in Example 2. Then, sample collection and extraction and component analysis of the obtained analysis samples were conducted in the same manner as in Example 2.

The amounts of glycine, sucrose, 2-hydroxypyridine and L-pyroglutamic acid in the soybean sample 24 hours after spraying were measured in the same manner as in Example 2. The results were shown in graphs of the relative values, where the values of Comparative Example 3 (an example in which water was applied instead of the growth promotion agent liquid) were regarded as 1.0. The quantification results of glycine, sucrose, 2-hydroxypyridine and L-pyroglutamic acid are shown in Figs. 1 to 4, respectively.

### [Comparative Example 5]

To a stearic acid dispersion which was adjusted to 50 ppm by adding stearic acid to 2000 mL of ion-exchanged water, 40 µL of pine oil (manufactured by ease, the main component was α-pinene) was added, and thus a comparison solution 5 was obtained. In the same manner as in Example 4, the comparison solution 5 was sprayed to soybean, and the gibberellin, glycine, sucrose, 2-hydroxypyridine and L-pyroglutamic acid contents of the soybean sample 24 hours after spraying were measured.

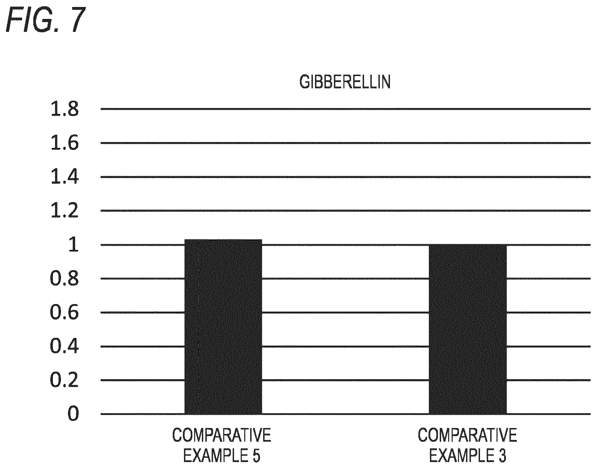

The gibberellin content of the soybean sample was 3.2 ng/gFW. The quantification results of gibberellin shown in a graph of the relative value, where the value of Comparative Example 3 was regarded as 1.0, are shown in Fig. 7.

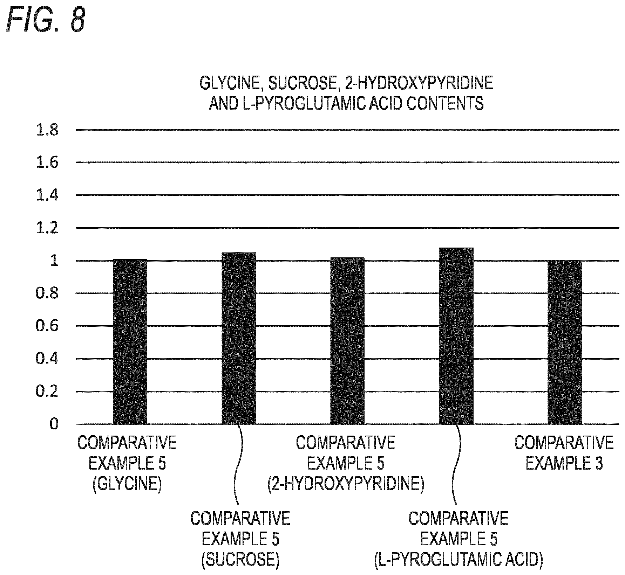

Moreover, the amounts of glycine, sucrose, 2-hydroxypyridine and L-pyroglutamic acid in the soybean sample 24 hours after spraying were shown in graphs of the relative values, where the values of Comparative Example 3 were regarded as 1.0. The quantification results are shown in Fig. 8.

### [Test Example 1]

A solution obtained by diluting 0.1 mL of a reaction solution (9-oxoODA/13-oxoODA>1, without the addition of pine oil) which was obtained by preparing in the same manner as in Example 3 to 2000 mL with ion-exchanged water was used as a test solution 1.

In the same manner as in Example 3, the test solution 1 was sprayed to rice, and sample collection and extraction and component analysis of the obtained analysis samples were conducted. The gibberellin content of the rice sample 24 hours after spraying was 0.23 ng/gFW. The quantification results of gibberellin shown in a graph of the relative value, where the value of Comparative Example 1 was regarded as 1.0, are shown in Fig. 6.

### [Test Example 2]

The test solution 1 which was prepared in the same manner as in Test Example 1 was sprayed to soybean in the same manner as in Example 4, and sample collection and extraction and component analysis of the obtained analysis samples were conducted.

The amounts of glycine, sucrose, 2-hydroxypyridine and L-pyroglutamic acid in the soybean sample 24 hours after spraying were measured in the same manner as in Example 4. The results were shown in graphs of the relative values, where the values of Comparative Example 3 described below (an example in which water was applied instead of the growth promotion agent liquid) were regarded as 1.0. The quantification results of glycine, sucrose, 2-hydroxypyridine and L-pyroglutamic acid are shown in Figs. 1 to 4, respectively.

The gibberellin content of the soybean sample 24 hours after spraying was 3.8 ng/gFW. The quantification results of gibberellin shown in a graph of the relative value, where the value of Comparative Example 3 described below (an example in which water was applied instead of the growth promotion agent liquid) was regarded as 1.0, are shown in Fig. 5.

As shown in Figs. 1 to 4, the glycine, sucrose, 2-hydroxypyridine and L-pyroglutamic acid contents increased in the soybean leaves to which the growth promotion agent liquids containing the oxo fatty acids and the terpene (Examples 2 and 4) were applied, compared to those of the solutions containing no terpene (Comparative Example 2 and Test Example 2) and the solution containing the terpene alone (Comparative Example 4). From the results of Example 2 and Example 4, it is seen that glycine, sucrose, 2-hydroxypyridine and L-pyroglutamic acid in the soybean leaves were increased more in the case in which the growth promotion agent liquid of Example 4 (9-oxoODA/13-oxoODA>1), which contained a large amount of 9-oxoODA, was applied, compared to the case in which the growth promotion agent liquid containing a large amount of 13-oxoODA (9-oxoODA/13-oxoODA<1, Example 2) was applied.

The four components, glycine, sucrose, 2-hydroxypyridine and L-pyroglutamic acid, are included in the components listed as components in which an increase in the contents thereof is an indicator of an increase in the soybean yield in JP2020-174553A (PTL 2). Accordingly, the results showing the increases in these four components mean that the soybean yield would be increased. From the results of Figs. 1 to 4, it is seen that the soybean yield is increased by applying a growth promotion agent liquid containing an oxo fatty acid and a terpene. Furthermore, it is seen that a growth promotion agent liquid containing 9-oxoODA in a relatively high amount can increase the soybean yield more effectively.

Moreover, from the results in Fig. 5, gibberellin in the soybean leaves also increased in the case in which the growth promotion agent liquids containing the oxo fatty acids and the terpene (Examples 2 and 4) were applied, compared to the cases in which the solutions containing no terpene (Comparative Example 2 and Test Example 2) were applied. Moreover, gibberellin was increased more in the case in which the growth promotion agent liquid containing 9-oxoODA in a relatively high amount (Example 4) was applied, compared to the case in which the growth promotion agent liquid containing 13-oxoODA in a relatively high amount (Example 2) was applied. Gibberellin is a plant hormone which governs the flower bud formation-promoting effect on soybean. It is seen that a growth promotion agent liquid containing an oxo fatty acid and a terpene has an action of increasing gibberellin in soybean and thus has an effect of increasing the harvesting amount of soybeans.

From the results in Fig. 6, gibberellin in the rice also increased in the case in which the growth promotion agent liquids containing the oxo fatty acids and the terpene (Examples 1 and 3) were applied, compared to the cases in which the solutions containing no terpene (Comparative Example 1 and Test Example 1) were applied. Gibberellin is a plant hormone which governs the flower bud formation-promoting effect on rice, and it is seen that a growth promotion agent liquid containing an oxo fatty acid and a terpene has an effect of increasing the harvesting amount of rice.

From the results in Fig. 7 and Fig. 8, the composition composed of a fatty acid having no carbonyl group, such as stearic acid, and a terpene did not have any effect of increasing gibberellin in soybean and could not increase the four components, glycine, sucrose, 2-hydroxypyridine and L-pyroglutamic acid, and thus it can be understood that the effect of increasing the harvesting amount of soybeans cannot be expected.

## Claims

1. A plant activator **characterized by** comprising a terpene and at least one compound selected from an oxo fatty acid, a derivative thereof and a salt thereof.

2. The plant activator according to claim 1, wherein the oxo fatty acid is represented by the following formula (I) or the following formula (II),
HOOC-(R¹)-C_{β}H=C_{α}H-C(=O)-R² (I)
wherein in the formula (I), R¹ represents a linear or branched, saturated or unsaturated hydrocarbon group containing six to twelve carbon atoms, R² represents an alkyl group having two to eight carbon atoms which may contain one or more branches and/or double bonds, C_{α} is an α-carbon which is the first adjacent to the carbonyl group to the R¹ side, and C_{β} is a β-carbon which is the second adjacent to the carbonyl group to the R¹ side, and
HOOC-(R³)-C(=O)-C_{α}H=C_{β}H-R⁴ (II)
wherein in the formula (II), R³ represents a linear or branched, saturated or unsaturated hydrocarbon group containing three to 10 carbon atoms, R⁴ represents a hydrocarbon group having four to 11 carbon atoms which may contain one or more branches and/or double bonds, C_{α} is an α-carbon which is the first adjacent to the carbonyl group to the R⁴ side, and C_{β} is a β-carbon which is the second adjacent to the carbonyl group to the R⁴ side.

3. The plant activator according to claim 2,
wherein in the formula (I), R¹ contains a double bond which forms a conjugated double bond with the double bond between the α-carbon C_{α} and the β-carbon C_{β} in the formula (I), and
in the formula (II), R⁴ contains a double bond which forms a conjugated double bond with the double bond between the α-carbon C_{α} and the β-carbon C_{β} in the formula (II).

4. The plant activator according to claim 3, wherein the oxo fatty acid represented by the formula (I) and the oxo fatty acid represented by the formula (II) are ketooctadecadienoic acids.

5. The plant activator according to claim 3,
wherein in the formula (I), R¹ is a linear or branched hydrocarbon group having nine carbon atoms, and R² is an alkyl group having five carbon atoms, and
in the formula (II), R³ is a linear or branched hydrocarbon group having seven carbon atoms, and R⁴ has seven carbon atoms and has the structure CH₃-CH₂-CH₂-CH₂-CH₂-CH=CH-.

6. The plant activator according to claim 1, wherein the oxo fatty acid is at least one kind selected from the group consisting of 9-oxo-10,12-octadecadienoic acid, 13-oxo-9,11-octadecadienoic acid, 5-oxo-6,8-octadecadienoic acid, 6-oxo-9,12-octadecadienoic acid, 8-oxo-9,12-octadecadienoic acid, 10-oxo-8,12-octadecadienoic acid, 11-oxo-9,12-octadecadienoic acid, 12-oxo-9,13-octadecadienoic acid and 14-oxo-9,12-octadecadienoic acid.

7. The plant activator according to claim 1, wherein the plant activator contains at least two or more oxo fatty acids.

8. The plant activator according to claim 2 comprising at least one oxo fatty acid represented by the formula (I) and at least one oxo fatty acid represented by the formula (II).

9. The plant activator according to claim 8, wherein the oxo fatty acid represented by the formula (I) is 13-oxo-9,11-octadecadienoic acid, and the oxo fatty acid represented by the formula (II) is 9-oxo-10,12-octadecadienoic acid.

10. The plant activator according to claim 9, wherein the weight ratio of the 9-oxo-10,12-octadecadienoic acid content to the 13-oxo-9,11-octadecadienoic acid content is 0.3 to 2.0.

11. The plant activator according to claim 9, wherein the weight ratio of the 9-oxo-10,12-octadecadienoic acid content to the 13-oxo-9,11-octadecadienoic acid content is 1.0 to 2.0.

12. The plant activator according to claim 1 which increases the production amount of at least one kind selected from the group consisting of 2-hydroxypyridine, glycine, L-pyroglutamic acid and sucrose.

13. The plant activator according to claim 1 which increases the production amount of a plant hormone.

14. The plant activator according to claim 13, wherein the plant hormone is gibberellin.

15. The plant activator according to claim 1, wherein the plant activator is for promoting flower bud formation and/or improving a yield.

16. The plant activator according to claim 1, wherein the terpene is a monoterpene.

17. The plant activator according to claim 1 which is a spray or an immersion agent that is brought into contact with a stem and a leaf or a root of a plant or an agent for soil irrigation.

18. The plant activator according to claim 1 which is a plant activator for the *Poaceae* or a plant activator for the *Fabaceae.*

19. The plant activator according to claim 1 which further comprises a hydroxylated fatty acid, a derivative thereof or a salt thereof.

20. The plant activator according to claim 19, wherein the hydroxylated fatty acid is at least one kind selected from the group consisting of 9,10,13-trihydroxy-11-octadecenoic acid and 9,12,13-trihydroxy-10-octadecenoic acid.
